(19)

Europäisches
Patentamt
European
Patent Office
Office européen
des brevets

(11) **EP 4 095 560 B1**

(12) **EUROPEAN PATENT SPECIFICATION**

(45) Date of publication and mention
of the grant of the patent:
**10.09.2025 Bulletin 2025/37**

(21) Application number: **20865826.0**

(22) Date of filing: **09.07.2020**

(51) International Patent Classification (IPC):
**G01S 17/08** (2006.01)    **G01S 7/48** (2006.01)
**G01S 7/497** (2006.01)    **G01S 17/06** (2006.01)
**G01S 7/481** (2006.01)

(52) Cooperative Patent Classification (CPC):
**G01S 17/06; G01S 7/497;** G01S 7/481

(86) International application number:
**PCT/CN2020/101118**

(87) International publication number:
**WO 2021/051970 (25.03.2021 Gazette 2021/12)**

(54) **METHOD AND APPARATUS FOR MEASURING TIME-OF-FLIGHT, STORAGE MEDIUM, AND LIDAR**

VERFAHREN UND VORRICHTUNG ZUR FLUGZEITMESSUNG, SPEICHERMEDIUM UND LIDAR

PROCÉDÉ ET APPAREIL POUR MESURER UN TEMPS DE VOL, SUPPORT DE STOCKAGE ET LIDAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2020  PCT/CN2020/073251**

(43) Date of publication of application:
**30.11.2022  Bulletin 2022/48**

(73) Proprietor: **Suteng Innovation Technology Co.,
Ltd.
Shenzhen, Guangdong 518000 (CN)**

(72) Inventor: **ZHOU, Xiaojun
Shenzhen City, Guangdong 518000 (CN)**

(74) Representative: **Ran, Handong et al
Maucher Jenkins
Seventh Floor Offices
Artillery House
11-19 Artillery Row
London SW1P 1RT (GB)**

(56) References cited:
EP-A1- 1 752 789          CN-A- 101 504 462
CN-A- 101 581 783        CN-A- 107 884 779
CN-A- 109 633 672        CN-A- 109 870 702
JP-A- H08 278 369        US-A1- 2015 138 371
US-A1- 2018 038 945

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

This application relates to the field of laser measurement, and in particular, to a method and device for measuring time of flight, and a storage medium.

## BACKGROUND

LiDAR is a device that emits a laser beam to detect relevant parameters of a target object. The working principle of the LiDAR is to emit a detection laser beam to the target object, then compare signals reflected from the target object with the emitted signals, and properly process the signals to obtain relevant parameters of the target object, such as distance, azimuth, height, speed, shape and other parameters of the target object.

The current LiDAR generally has a built-in photoelectric receiving device. The built-in photoelectric receiving device converts optical signals reflected by the target object into analog electrical signals, and then amplifies and transfers the analog electrical signals to an analog-to-digital converter (ADC). The analog-to-digital converter converts the analog electrical signals into digital signals, and then the digital signals are processed by signal processing such as detection to obtain time of flight of the target object relative to the LiDAR. The distance from the LiDAR to the target object is calculated according to the time of flight.

However, the inventor found that electronic devices such as a laser, a photoelectric receiving element, a chip, a capacitor, and a resistor in the LiDAR were sensitive to environmental parameters (such as temperature, humidity, or air pressure, etc.). For a target object at the same location, there may be a large difference in the time of flight measured under the different environmental parameters, which affects the accuracy of the LiDAR to measure the time of flight.

EP 1752789A1 discloses a receiver (6) that detects light transmitted from a laser diode transmitter and reflected from an object, and provides a low-frequency measurement signal. The transmitter is high-frequency modulated with a modulation signal (MOF) via a drive line.

US20150138371A1 discloses an apparatus, comprising: a sensor module including a plurality of photosensitive pixels, arranged to capture an image of an area. At least one photosensitive pixel of the plurality of photosensitive pixels is arranged to receive an electrical reference signal and to output a calibration signal, the calibration signal arranged to calibrate an imaging system including the sensor module.

US20180038945A1 discloses imaging devices and methods for determining a distance to a target object utilizing a single sensor array.

## SUMMARY

Embodiment of this application provides a method and device for measuring time of flight, storage medium and a LiDAR, which solves the problem of inaccurate measurement results of time of flight in the related art. Technical solutions are as follows. The invention is set out in the appended set of claims.

In a first aspect, an embodiment of this application provides a method for measuring time of flight, according to independent claim 1.

In a second aspect, an embodiment of this application provides a device for measuring time of flight, according to independent claim 8.

In a third aspect, an embodiment of this application provides a computer storage medium, according to independent claim 9.

The beneficial effects provided by the technical solutions of embodiments of this application comprise at least: When measuring the time of flight corresponding to the target object, the reference signals are transmitted in the first signal link. The first transmission time of the reference signals in the first signal link is measured. The measurement signals are transmitted in the second signal link. The transmission time of the measurement signals in the second signal link is measured. The first signal link and the second signal link in this application have the shared device. The shared device is a temperature-sensitive device, that is, the device whose delay time varies greatly as temperature changes. The non-shared device of the first signal link and the second signal link is a non-temperature sensitive device, that is, a device whose delay time remains basically unchanged as the temperature changes. According to the first transmission time, the second transmission time, and the delay time of the non-shared device, the time of flight corresponding to the target object is determined. In the embodiment of this application, since the shared device of the first transmission link and the second transmission link is the temperature-sensitive device, the delay time of the temperature-sensitive device may be eliminated according to the differential processing of the first transmission time and the second transmission time. Thus the measurement results of the time of flight are only related to the delay time of the non-temperature sensitive device, thereby reducing the problem of the inaccurate measurement of the time of flight of the target object caused by the temperature change of a device for measuring, and improving the measurement accuracy of the device for measuring.

## BRIEF DESCRIPTION OF THE DRAWINGS

To explain embodiments of this application or the technical solutions in the prior art more clearly, the following briefly introduces the drawings that need to be used in the embodiments or the prior art. Obviously, the drawings in the following description are only some embodiments of this application.

FIG. 1 is a schematic diagram of the measurement principle of a device for measuring in the prior art;
FIG. 2 is a schematic flowchart of a method for measuring time of flight according to an embodiment of this application;
FIG. 3 is a schematic structural diagram of a single-channel device for measuring according to an embodiment of this application;
FIG. 4 is a schematic structural diagram of a multi-channel device for measuring according to an embodiment of this application;
FIG. 5 is a schematic structural diagram of a device for measuring according to this application.

## DESCRIPTION OF THE INVENTION

To make the objectives, technical solutions and advantages of this application clearer, the embodiments of this application are described in further detail below with reference to the drawings.

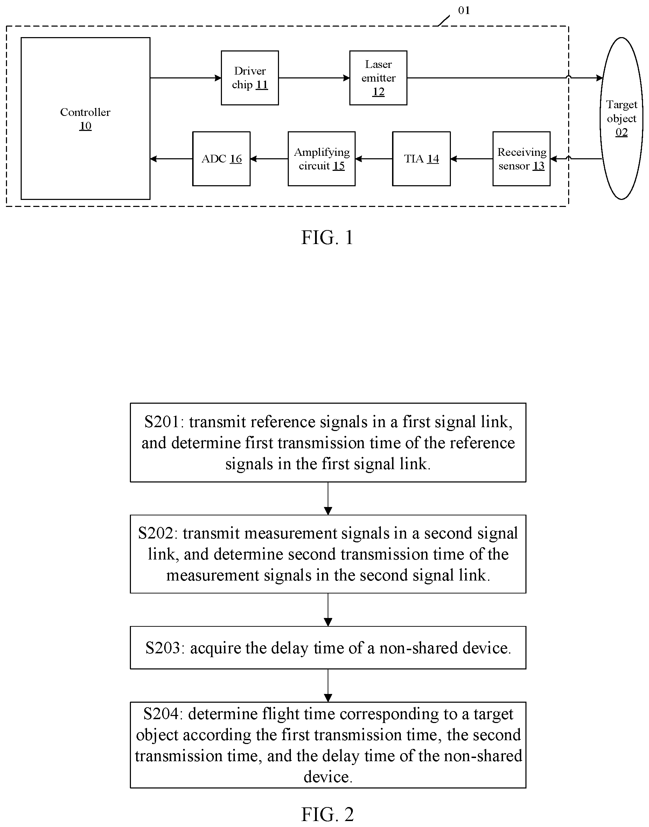

FIG. 1 shows a schematic diagram of the measurement principle of the measuring device in the prior art. In FIG. 1, a measuring device 01 comprises a controller 10, a driver chip 11, a laser emitter 12, a receiving sensor 13, a TIA (trans-impedance amplifier) 14, an amplifying circuit 15, and an ADC (analog-to-digital converter) 16. The laser emitter 12 may consist of a gallium nitride MOS tube and a laser diode. The measuring device 01 is configured to measure time of flight between the measuring device 01 and a target object 02. The distance between the measuring device 01 and the target object 02 is determined according to the time of flight. The process of measuring the time of flight by the measuring device 01 comprises:

The controller 10 sends control signals to the driver chip 11 via an output port. The driver chip 11 drives the laser emitter 12 to emit laser ranging signals according to the control signals. The laser ranging signals are reflected when they encounter an object ahead. The laser sensor 13 receives laser echo signals returned after the laser ranging signals are reflected by the object, and converts the laser echo signals into current signals. The TIA 14 converts the current signals into voltage signals. The amplifying circuit 15 amplifies the voltage signals. The ADC 16 samples the amplified voltage signals to obtain digital signals (echo signals), and inputs the digital signals to an input port of the controller 10. The controller 10 determines time difference t according to time when the control signals are transmitted and time when corresponding echo signals are received. In addition to the time of flight, the time difference t also comprises various delay links in FIG. 1. For example, the time difference t comprises a plurality of time components shown in Table 1:

Table 1

| Delay link | Delay time |
| --- | --- |
| Emitting control delay | t1 |
| The delay of a driver chip | t2 |
| GaN conducting delay | t3 |
| LD emitting-light delay | t4 |
| Time of flight | t5 |
| The photoelectric conversion delay of a receiving sensor | t6 |
| The conversion delay of TIA | t7 |
| The delay of an amplifying circuit | t8 |
| The conversion delay of ADC | t9 |
| The data transmission delay of ADC | t10 |

According to Table 1, actual time of flight between the device for measuring and the target object is t5. A measured value of the time of flight is t=t1+t2+t3+t4+t5+t6+t7+t8+t9+t10. A measurement error is t1+t2+t3+t4+t6+t7+t8+t9+t10. In the related art, in order to reduce the measurement error, it is necessary to perform static calibration for each delay link, calculate the static error of each delay link, and then subtract the static error to obtain the actual measured value of the time of flight. The inventor found that some devices in the device for measuring were temperature-sensitive devices. The delay time varies greatly as temperature changes. For example, taking a certain driver chip as an example, when ambient temperature is 25°C, the delay time of the driver chip is 30ns. When the ambient temperature ranges from -40°C to 85°C, the maximum delay time of the driver chip is 35ns. According to a ranging formula, the error of the time of flight of 1ns leads to a ranging error of 15cm. If a static calibration method is used for determining the delay time of each device, there will be a larger error in the measurement results of the time of flight.

FIG. 2 is a schematic flowchart of a method for measuring time of flight according to an embodiment of this application. As shown in FIG. 2, the method may comprise the following steps.

S201: transmitting reference signals in a first signal link, and determining first transmission time of the reference signals in the first signal link.

The first signal link is a signal link for transmitting reference signals. A plurality of devices are provided in the first signal link. The reference signals are signals with specified signal features generated by the controller. The signal features comprise one or more of frequency, amplitude and phase. The controller is provided with an input port and an output port. The output port is configured to transmit signals. The input port is configured to receive signals. The controller generates the reference signals, and transmits the reference signals on the first signal link via the output port. The reference signals reach the input port of the controller after passing through each device in the first signal link. Each device in the first signal link performs processes on the reference signals accordingly, for example, driving, amplifying, analog-to-digital conversion, etc. The controller receives the reference signals via the input port. The controller determines the first transmission time of the reference signals in the first signal link according to transmission time and reception time of the reference signals.

S202: transmitting measurement signals in a second signal link, and determining second transmission time of the measurement signals in the second signal link.

The second signal link is a signal link for transmitting measurement signals. A plurality of devices in the second signal link are provided. The measurement signals are also signals with specified signal features. The controller generates the measurement signals, and then transmits the measurement signals in the second signal link via the output port. The measurement signals are photoelectrically converted to generate laser measurement signals. The laser measurement signals meet the target object and are reflected to form laser echo signals, which are then received by the device for measuring. The laser echo signals are photoelectrically converted to generate electrical signals by the device for measuring and then the electrical signals reach the input port of the controller. The device for measuring determines the second transmission time according to transmission time and reception time of the measurement signals.

The plurality of devices in the first signal link are provided. The plurality of devices in the second signal link are provided. The first signal link and the second signal link have at least a shared device, and the shared device is a temperature-sensitive device. The temperature-sensitive device is a device whose delay time varies greatly as temperature changes. Any device other than the shared device in the first signal link and the second signal link is referred to as "non-shared device" in this application. All non-shared devices are non-temperature sensitive devices, that is, delay time of the non-temperature sensitive devices changes insignificantly as temperature changes. The measurement signals are configured to measure the time of flight. The second signal link of this application comprises a signal link corresponding to the time of flight, that is, a signal link which the laser measurement signals and the laser echo signals pass through.

For example, the devices in the first signal link are a device A, a device B, a device C, and a device D. The devices in the second signal link are the device A, the device B, the device D, a device E, and a device F. The shared devices shared by the signal links are the device A, the device B, and the device D. The foregoing three devices are all temperature-sensitive devices. The non-shared devices in the first signal link and the second signal link are the device C, the device E, and the device F. The foregoing three devices are all non-temperature sensitive devices.

S203: acquiring delay time of the non-shared device.

The delay time of the non-shared device may be pre-stored in a memory. The non-shared device of the first signal link and the second signal link is a non-temperature sensitive device. Therefore, the delay time of the non-shared device may be determined by static calibration. Then, the delay time of each non-shared device acquired by the static calibration is stored in the memory. The controller reads the delay time of the non-shared device from the memory.

For example, according to the example of S202, the non-shared devices are the device C, the device E, and the device F. The delay time $t_C$ of the device C, the delay time $t_E$ of the device E, and the delay time $t_F$ of the device F are pre-stored in the memory. The controller reads the delay time of the foregoing three non-shared devices from the memory.

S204: determining time of flight corresponding to the target object according to the first transmission time, the second transmission time, and the delay time of the non-shared device.

The time of flight is time difference between the moment when the laser measurement signals are emitted by the device for measuring and the moment when the laser echo signals are received by the device for measuring. The second signal link in this application comprises a signal link for transmitting the laser measurement signals and the laser echo signals. Since the shared device of the first signal link and the second signal link is a temperature-sensitive device, the transmission time of the second signal link and the transmission time of the first signal link are differentially processed, which may eliminate the influence of the delay time of the temperature-sensitive device on the measurement results of the time of flight and may improve the measurement accuracy of the time of flight.

For example, according to the example of S202, assuming that the first transmission time is T1 and the second transmission time is T2, then

$$T2-T1 = t_{TOF} + t_E + t_F - t_C, \quad t_{TOF} = T2-T1 - t_E - t_F + t_C.$$

In one or more possible implementations, the devices in the first signal link comprise a driver chip, a reference signal conditioning circuit, a selection switch, an amplifying circuit, and an ADC.

The devices in the second signal link comprise the driver chip, the selection switch, the amplifying circuit, the ADC, a laser emitter, a TIA, and a receiving sensor;

The first signal link is a signal link from an output port of the controller, via the driver chip, the reference signal conditioning circuit, the selection switch, the amplifying circuit, and the ADC, to an input port of the controller.

The second signal link is a signal link from the output port of the controller, via the driver chip, the laser emitter, the target object, the receiving sensor, the TIA, the selection switch, the amplifying circuit, and the ADC, to the input port of the controller.

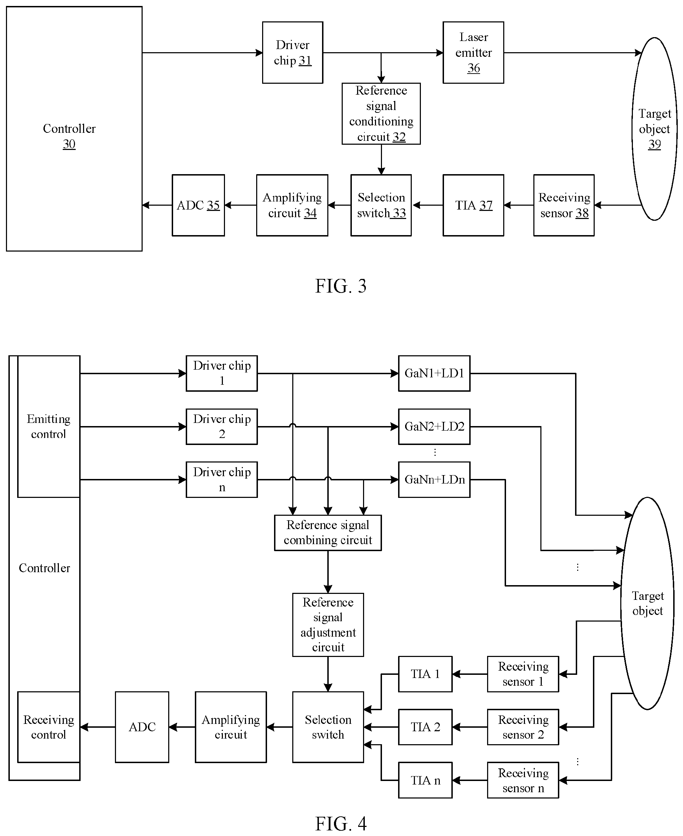

As shown in FIG. 3, the device for measuring comprises a controller 30, a driver chip 31, a reference signal conditioning circuit 32, a selection switch 33, an amplifying circuit 34, an ADC 35, a laser emitter 36, a TIA 37, and a receiving sensor 38. The device for measuring calculates the time of flight between the device for measuring and a target object 39. The devices in the first signal link include the driver chip 31, the reference signal conditioning circuit 32, the selection switch 33, the amplifying circuit 34 and the ADC 35. The devices in the second signal link include the driver chip 31, the laser emitter 36, the receiving sensor 38, the TIA 37, the selection switch 33, the amplifying circuit 34, and the ADC 35. The selection switch 33 may be a single-pole double-throw switch. The controller 30 may control the selection switch 33 so that the amplifying circuit 34 is conducted with the reference signal conditioning circuit 32 or the TIA 37. When the amplifying circuit 34 and the reference signal conditioning circuit 32 are connected, the controller 30 transmits signals via the first signal link. When the amplifying circuit 34 and the TIA 37 are connected, the controller 30 transmits signals via the second signal link.

The first signal link is the signal link from the output port of the controller 30, via the driver chip 31, the reference signal conditioning circuit 32, the selection switch 33, the amplifying circuit 34, and the ADC 35, to the input port of the controller 30. The second signal link is the signal link from the output port of the controller 30, via the driver chip 31, the laser emitter 36, the target object 39, the receiving sensor 38, the TIA 37, the selection switch 33, the amplifying circuit 34, and the ADC 35, to the input port of the controller 30.

The controller 30 may be realized with at least one hardware form of digital signals processing (DSP), a field-programmable gate array (FPGA), and a programmable logic array (PLA).

As shown in FIG. 3,the shared devices of the first signal link and the second signal link include the controller 30, the driver chip 31, the selection switch 33, the amplifying circuit 34 and the ADC 35. The non-shared devices of the first signal link and the second signal link include the reference signal conditioning circuit 32, the laser emitter 36, the TIA 37, and the receiving sensor 38. The controller 30, the driver chip 31, the selection switch 33, the amplifying circuit 34, and the ADC 35 are temperature sensitive devices. The reference signal conditioning circuit 32, the laser emitter 36, the TIA 37, and the receiving sensor 38 are non-temperature sensitive devices.

In one or more possible embodiments, the laser emitter comprises a gallium nitride MOS tube and a laser diode.

The driver chip is configured to drive the laser emitter to emit laser signals according to control signals from the controller 30. The control signals may control the emission time, the number of emission times, emission power, duration and other parameters of the laser signals. The laser emitter may be one or more laser diodes and one or more gallium nitride MOS tubes. The plurality of laser diodes may form an emitting array.

In one or more possible embodiments, the device parameters of the reference signal conditioning circuit and the TIA are the same and comprise delay time. The reference signal conditioning circuit and the TIA realize the same function. The reference signal conditioning circuit shapes and filters the signals output by the driver chip to obtain signals with the same or similar signal features as the output signals of the TIA. For example, the reference signal conditioning circuit and the TIA are of the same model.

In one or more possible embodiments, the method further comprises:

before transmitting the reference signals, transmitting first control signals to the selection switch, wherein the first control signals are configured to control the selection switch to conduct the amplifying circuit and the reference signal conditioning circuit; or

before transmitting the measurement signals, transmitting second control signals to the selection switch, wherein the second control signals are configured to control the selection switch to conduct the amplifying circuit and the TIA.

The selection switch 33 may be a single-pole double-throw switch and controls the amplifying circuit 34 to be conducted to one of the reference signal conditioning circuit 32 and the TIA 37 at any time. Before transmitting the reference signals, the controller 30 transmits the first control signals to the selection switch 33. The first control signals control the selection switch to conduct the amplifying circuit 34 and the reference signal conditioning circuit. At this time, the amplifying circuit 34 and the TIA 37 are disconnected, and the reference signals are transmitted via the first signal link. Before transmitting the measurement signals, the controller 30 transmits the second control signals to the selection switch 33. The second control signals control the selection switch 33 to conduct the amplifying circuit 34 and the TIA 37. At this time, the reference signal conditioning circuit 32 and the amplifying circuit 34 are disconnected; and the measurement signals are transmitted via the second signal link.

In one or more possible implementations, determining the time of flight corresponding to the target object according to the first transmission time, the second transmission time, and the delay time of the non-shared device comprises:

determining the time of flight corresponding to the target object according to the following formula:

$$T_2 - T_1 = t_{laserT} + t_{TOF} + t_{laserR} + t_{TIA} - t'_{RS} ;$$

where $T_2$ is the second transmission time; $T_1$ is the first transmission time; $t_{laserT}$ is delay time of the laser emitter; $t_{TOF}$ is the time of flight corresponding to the target object; $t_{laserR}$ is delay time of the receiving sensor; $t_{TIA}$ is delay time of the TIA, and $t'_{RS}$ is delay time of the reference signal conditioning circuit.

Taking the device for measuring in FIG. 3 as an example to illustrate the method for measuring the time of flight of this application: assuming that the laser emitter comprises a gallium nitride MOS tube and a laser diode, the device for measuring transmits the reference signals in the first signal link before measuring the time of flight corresponding to the target object. The delay time in each delay link in the first signal link is shown in Table 2:

Table 2

| Delay link | Delay time |
|---|---|
| Emitting control delay | t1 |
| The delay of a driver chip | t2 |
| GaN conducting delay | |
| LD emitting-light delay | |
| Time of flight | |
| The photoelectric conversion delay of a receiving sensor | |
| Reference signal conditioning circuit | t7' |
| The delay of an amplifying circuit | t8 |
| The conversion delay of ADC | t9 |
| The data transmission delay of ADC | t10 |

Then, the device for measuring transmits the measurement signals in the second signal link. The delay time of each delay link in the second signal link is shown in Table 3:

Table 3

| Delay link | Delay time |
|---|---|
| Emitting control delay | t1 |
| The delay of a driver chip | t2 |
| GaN conducting delay | t3 |

(continued)

| Delay link | Delay time |
|---|---|
| LD emitting-light delay | t4 |
| Time of flight | $t_{TOF}$ |
| The photoelectric conversion delay of a receiving sensor | t6 |
| The conversion delay of TIA | t7 |
| The delay of an amplifying circuit | t8 |
| The conversion delay of ADC | t9 |
| The data transmission delay of ADC | t10 |

In a case that the delay time of the reference signal conditioning circuit and the TIA are equal, that is, t7=t7', time obtained by subtracting the first transmission time from the second transmission time is $t=t3+t4+t_{TOF}+t6$. t3, t4 and t6 are GaN conducting delay time, LD emitting-light delay time, and the photoelectric conversion delay time of the receiving sensor, respectively. The foregoing three devices are all non-temperature sensitive devices. The specific values of t3, t4 and t6 may be obtained by the static calibration. t3, t4 and t6 are subtracted from t to obtain the accurate time of flight $t_{TOF}$.

Referring to FIG. 4, an embodiment of this application provides a schematic structural diagram of a multi-channel device for measuring. Compared with a single-channel device for measuring, a reference signal combining circuit is added. In the embodiment of this application, the device for measuring is provided with n measurement channels. Each measurement channel include a first signal link and a second signal link, and n is an integer greater than 1. For example, devices in the first signal link corresponding to a channel 1 include a driver chip 1, the reference signal combining circuit, a reference signal conditioning circuit, a selection switch, an amplifying circuit, and an ADC. Devices in the second signal link include the driver chip 1, GaN1+LD1 (a laser emitter 1), a receiving sensor 1, TIA1, the selection switch, the amplifier circuit, and the ADC. For each multi-channel device for measuring, since temperature is a slowly changing quantity, it is not necessary to test the reference signal delay time of all channels in each transceiving cycle. The reference signal delay time of one of the channels is tested in one transceiving cycle so that the reference signal delay time of all channels may be measured once in every n transceiving cycles.

In the embodiments of this application, the shared device of the first transmission link and the second transmission link is a temperature-sensitive device, the delay time of the temperature-sensitive device may be eliminated according to the differential processing of the first transmission time and the second transmission time. Therefore, the measurement results of the time of flight are only related to the delay time of the non-temperature sensitive device. Therefore, the problem of inaccurate measurement of the time of flight of the target object caused by the temperature change of the device for measuring may be reduced, and the measurement accuracy of the device for measuring may be improved.

An embodiment of this application also provides a computer storage medium. The computer storage medium may store a plurality of instructions. The instructions are adapted to be loaded by a processor to execute the method of the embodiments shown in FIGS. 2-4 above. For the specific execution process, please refer to the specific description of the embodiments shown in FIGS. 2-4, which is not repeated here.

This application also provides a computer program product. The computer program product stores at least one instruction. The at least one instruction is loaded and executed by the processor to implement a method for measuring described in each of the above embodiments.

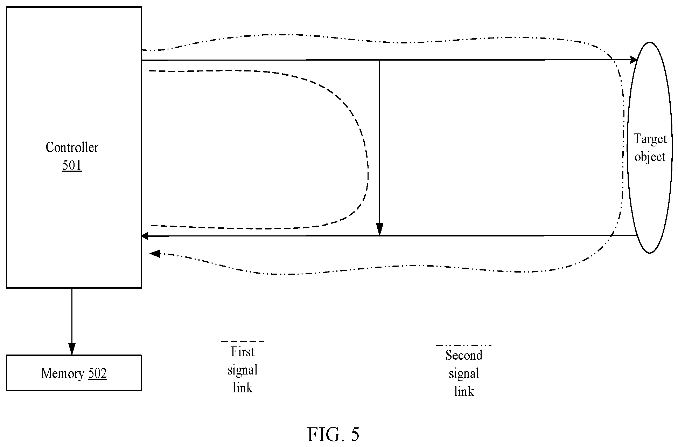

FIG. 5 is a schematic structural diagram of a device for measuring according to this application. As shown in FIG. 5, the device for measuring may comprise a controller 501, a memory 502, a first signal link, and a second signal link. A plurality of devices are provided in the first signal link and the second signal link.

The controller 501 and the memory 502 may be connected via a communication bus. For example, the communication bus is an SPI (Serial Peripheral Interface) bus.

The controller 501 may comprise one or more processing cores. The controller 501 uses various interfaces and lines to connect various parts of the entire device for measuring, and executes various functions and processing data of the device for measuring by running or executing instructions, programs, code sets, or instruction sets stored in the memory 502, and calling data stored in the memory 502. Optionally, the controller 501 may be realized with at least one hardware form of DSP, a FPGA, and a PLA. The controller 501 may integrate a central processing unit (CPU), a graphics processing unit (GPU), a modem, and the like or a combination thereof. The CPU mainly processes an operating system, a user interface, and application programs. The GPU is configured to render and draw content that needs to be displayed on a display. The modem is configured to process wireless communication. It may be understood that the foregoing modem may not be integrated into the controller 501, and may be implemented by one chip alone.

The memory 502 may comprise a random access memory (RAM), or a read-only memory (ROM). Optionally, the memory 502 comprises a non-transitory computer-readable storage medium. The memory 502 may be configured to store the instructions, the programs, the codes, the code sets or the instruction sets. The memory 502 may comprise a program storage region and a data storage region. The program storage region may store instructions for implementing the operating system, instructions for at least one function (such as a system update function, etc.), and instructions for implementing each of the foregoing method embodiments. The data storage region may store data involved in each method embodiment above. Optionally, the memory 502 may also be at least one storage device positioned away from the foregoing main controller 501.

In the device for measuring shown in FIG. 5, the controller 501 may be configured to call the computer program stored in the memory 502 to execute the following steps:

transmitting reference signals in a first signal link, and determining the first transmission time of the reference signals in the first signal link;

transmitting measurement signals in a second signal link, and determining the second transmission time of the measurement signals in the second signal link, wherein a shared device of the first signal link and the second signal link is a temperature-sensitive device, and a non-shared device of the first signal link and the second signal link is a non-temperature-sensitive device;

acquiring delay time of the non-shared device; and

determining time of flight corresponding to a target object according to the first transmission time, the second transmission time, and the delay time of the non-shared device.

Optionally, devices in the first signal link comprise a driver chip, a reference signal conditioning circuit, a selection switch, an amplifying circuit, and an ADC.

Devices in the second signal link comprise the driver chip, the selection switch, the amplifying circuit, the ADC, a laser emitter, a TIA, and a receiving sensor.

The first signal link is a signal link from an output port of the controller, via the driver chip, the reference signal conditioning circuit, the selection switch, the amplifying circuit, and the ADC, to an input port of the controller.

The second signal link is a signal link from the output port of the controller, via the driver chip, the laser emitter, the target object, the receiving sensor, the TIA, the selection switch, the amplifying circuit, and the ADC, to the input port of the controller.

Optionally, the laser emitter comprises a gallium nitride MOS tube and a laser diode.

Optionally, the device parameters of the reference signal conditioning circuit and the TIA are the same and comprise the delay time.

Optionally, the controller 501 is also configured to execute:

before transmitting the reference signals, transmitting first control signals to the selection switch, wherein the first control signals are configured to control the selection switch to conduct the amplifying circuit and the reference signal conditioning circuit; or

before transmitting the measurement signals, transmitting second control signals to the selection switch, wherein the second control signals are configured to control the selection switch to conduct the amplifying circuit and the TIA.

Optionally, the step of determining the time of flight corresponding to the target object according to the first transmission time, the second transmission time, and the delay time of the non-shared device comprises:

determining the time of flight corresponding to the target object according to the following formula:

$$T_2 - T_1 = t_{laserT} + t_{TOF} + t_{laserR} + t_{TIA} - t'_{RS} ;$$

where $T_2$ is the second transmission time; $T_1$ is the first transmission time; $t_{laserT}$ is delay time of the laser emitter; $t_{TOF}$ is the time of flight corresponding to the target object; $t_{laserR}$ is delay time of the receiving sensor; $t_{TIA}$ is delay time of the TIA, and $t'_{RS}$ is delay time of the reference signal conditioning circuit.

Optionally, acquiring the delay time of the non-shared device comprises:

acquiring the pre-stored delay time of the non-shared device from the memory 502, wherein the delay time is determined by using a static calibration method.

The embodiment of FIG. 5 and the method embodiment of FIG. 2 are based on the same concept, and have the same technical effects. For the specific implementation process of FIG. 5, please refer to the description of FIG. 2, which is not repeated here.

This application also provides a LiDAR, comprising a device for measuring shown in FIG. 5, and the LiDAR in this application may be a multi-channel LiDAR.

The person skilled in the art can understand that all or part of procedures in methods of the foregoing embodiments can be implemented by instructing relevant hardware via computer program. The program can be stored in a computer readable storage medium. During execution, the computer program can comprise the procedures of the embodiments of the foregoing methods. A storage medium can be a magnetic disk, an optical disc, the read-only storage memory or the random storage memory, and so on.

**Claims**

1.  A method for measuring time of flight, comprising:

    transmitting reference signals in a first signal link, and determining first transmission time of the reference signals in the first signal link (S201);
    transmitting measurement signals in a second signal link, and determining second transmission time of the measurement signals in the second signal link (S202),
    **characterized in that**,
    a shared device of the first signal link and the second signal link is a temperature-sensitive device, and a non-shared device of the first signal link and the second signal link is a non-temperature-sensitive device,
    the method further comprises:

    acquiring delay time of the non-shared device (S203); and
    determining time of flight corresponding to a target object according to the first transmission time, the second transmission time, and the delay time of the non-shared device (S204),
    wherein the determining time of flight corresponding to a target object comprises differential processing of the first transmission time and the second transmission time.

2.  The method according to claim 1, wherein devices in the first signal link comprise a driver chip (31), a reference signal conditioning (circuit 32), a selection switch (33), an amplifying circuit (34), and an analog-to-digital converter (35); and

    devices in the second signal link comprise the driver chip (31), the selection switch (33), the amplifying circuit (34), the analog-to-digital converter (35), a laser emitter (36), a transimpedance amplifier (37), and a receiving sensor (38),
    wherein the first signal link is a signal link from an output port of a controller (30, 501), via the driver chip, the reference signal conditioning circuit, the selection switch, the amplifying circuit, and the analog-to-digital converter, to an input port of the controller, and
    wherein the second signal link is a signal link from the output port of the controller, via the driver chip, the laser emitter, the target object, the receiving sensor, the transimpedance amplifier, the selection switch, the amplifying circuit, and the analog-to-digital converter, to the input port of the controller.

3.  The method according to claim 2, wherein the laser emitter comprises a gallium nitride MOS tube and a laser diode.

4.  The method according to claim 2 or 3, wherein device parameters of the reference signal conditioning circuit (32) and the transimpedance amplifier (37) are the same and comprise delay time.

5.  The method according to any one of claim 2 to 4, further comprising:

    before transmitting the reference signals, transmitting first control signals to the selection switch (33), wherein the first control signals are configured to control the selection switch to conduct the amplifying circuit (34) and the reference signal conditioning circuit (32); or
    before transmitting the measurement signals, transmitting second control signals to the selection switch (33), wherein the second control signals are configured to control the selection switch to conduct the amplifying circuit (34) and the transimpedance amplifier (37).

6.  The method according to claim 2, wherein the determining the time of flight corresponding to the target object according to differential processing of the first transmission time, the second transmission time, and the delay time of the non-shared device comprises:

determining the time of flight corresponding to the target object according to the following formula:

$$T_2 - T_1 = t_{laserT} + t_{TOF} + t_{laserR} + t_{TIA} - t'_{RS} .$$

wherein $T_2$ is the second transmission time; $T_1$ is the first transmission time; $t_{laserT}$ is delay time of the laser emitter; $t_{TOF}$ is the time of flight corresponding to the target object; $t_{laserR}$ is delay time of the receiving sensor; $t_{TIA}$ is delay time of the transimpedance amplifier, and $t'_{RS}$ is delay time of the reference signal conditioning circuit.

7. The method according to claim 1, wherein the acquiring the delay time of the non-shared device comprises: acquiring pre-stored delay time of the non-shared device from a memory (502), wherein the pre-stored delay time of the non-shared device is determined by using a static calibration method.

8. A device for measuring time of flight, comprising: a controller (30, 501), a memory (502), a first signal link, and a second signal link, wherein the memory stores a computer program, and the computer program is configured to be loaded by the controller to execute steps comprising:

transmitting reference signals in the first signal link, and determining first transmission time of the reference signals in the first signal link (S201);
**characterized in that** the steps further comprise:

transmitting measurement signals in the second signal link, and determining second transmission time of the measurement signals in the second signal link (S202), wherein a shared device of the first signal link and the second signal link is a temperature-sensitive device, and a non-shared device of the first signal link and the second signal link is a non-temperature-sensitive device;
acquiring delay time of the non-shared device (S203); and
determining time of flight corresponding to a target object according to the first transmission time, the second transmission time, and the delay time of the non-shared device (S204),
wherein the determining time of flight corresponding to a target object comprise differential processing of the first transmission time and the second transmission time.

9. A computer storage medium, wherein the computer storage medium stores a plurality of instructions adapted to be loaded by the controller (30, 501) of the device according to claim 8 to execute the method according to any one of claims 1-7.


**Patentansprüche**

1. Verfahren zur Messung der Flugzeit, umfassend:

Senden von Referenzsignalen über eine erste Signalleitung und Bestimmen einer ersten Übertragungszeit der Referenzsignale in der ersten Signalleitung (S201);
Senden von Messsignalen in einer zweiten Signalleitung und Bestimmen einer zweiten Übertragungszeit der Messsignale in der zweiten Signalleitung (S202),
**dadurch gekennzeichnet, dass**
ein gemeinsames Gerät der ersten und zweiten Signalleitung ein temperaturabhängiges Gerät ist und ein nicht gemeinsames Gerät der ersten und zweiten Signalleitung ein nicht temperaturabhängiges Gerät ist,
das Verfahren ferner umfasst:

Erfassen der Verzögerungszeit des nicht gemeinsamen Geräts (S203); und
Bestimmen der Flugzeit, die einem Zielobjekt entspricht, basierend auf der ersten Übertragungszeit, der zweiten Übertragungszeit und der Verzögerungszeit des nicht gemeinsamen Geräts (S204),
wobei das Bestimmen der Flugzeit, die einem Zielobjekt entspricht, eine Differenzverarbeitung der ersten und zweiten Übertragungszeit umfasst.

2. Verfahren nach Anspruch 1, wobei Geräte in der ersten Signalleitung einen Treiberchip (31), eine Referenzsignalaufbereitungsschaltung (32), einen Auswahlschalter (33), eine Verstärkerschaltung (34) und einen Analog-Digital-Wandler (35) umfassen; und

Geräte in der zweiten Signalleitung den Treiberchip (31), den Auswahlschalter (33), die Verstärkerschaltung (34), den Analog-Digital-Wandler (35), einen Lasersender (36), einen Transimpedanzverstärker (37) und einen Empfangssensor (38) umfassen, wobei die erste Signalleitung eine Signalleitung von einem Ausgangsport eines Controllers (30, 501) über den Treiberchip, die Referenzsignalaufbereitungsschaltung, den Auswahlschalter, die Verstärkerschaltung und den Analog-Digital-Wandler zu einem Eingangsport des Controllers ist, und
wobei die zweite Signalleitung eine Signalleitung von dem Ausgangsport des Controllers über den Treiberchip, den Lasersender, das Zielobjekt, den Empfangssensor, den Transimpedanzverstärker, den Auswahlschalter, die Verstärkerschaltung und den Analog-Digital-Wandler zu dem Eingangsport des Controllers ist.

3. Verfahren nach Anspruch 2, wobei der Lasersender einen Galliumnitrid-MOS-Transistor und eine Laserdiode umfasst.

4. Verfahren nach Anspruch 2 oder 3, wobei Geräteparameter der Referenzsignalaufbereitungsschaltung (32) und des Transimpedanzverstärkers (37) identisch sind und Verzögerungszeiten umfassen.

5. Verfahren nach einem der Ansprüche 2 bis 4, ferner umfassend:

vor dem Senden der Referenzsignale Senden von ersten Steuersignalen an den Auswahlschalter (33), wobei die ersten Steuersignale dazu eingerichtet sind, den Auswahlschalter zu steuern, um die Verstärkerschaltung (34) und die Referenzsignalaufbereitungsschaltung (32) zu leiten; oder
vor dem Senden der Messsignale Senden von zweiten Steuersignalen an den Auswahlschalter (33), wobei die zweiten Steuersignale dazu eingerichtet sind, den Auswahlschalter zu steuern, um die Verstärkerschaltung (34) und den Transimpedanzverstärker (37) zu leiten.

6. Verfahren nach Anspruch 2, wobei das Bestimmen der Flugzeit, die dem Zielobjekt entspricht, basierend auf der Differenzverarbeitung der ersten Übertragungszeit, der zweiten Übertragungszeit und der Verzögerungszeit des nicht gemeinsamen Geräts umfasst:

Bestimmen der Flugzeit, die dem Zielobjekt entspricht, gemäß der folgenden Formel:

$$T_2 - T_1 = t_{laserT} + t_{TOF} + t_{laserR} + t_{TIA} - t'_{RS},$$

wobei $T_2$ die zweite Übertragungszeit ist; $T_1$ die erste Übertragungszeit ist; $T_{laserT}$ die Verzögerungszeit des Lasersenders ist; $t_{TOF}$ die Flugzeit, die dem Zielobjekt entspricht, ist; $T_{laserR}$ die Verzögerungszeit des Empfangssensors ist; $T_{TIA}$ die Verzögerungszeit des Transimpedanzverstärkers ist, und $t'_{RS}$ die Verzögerungszeit der Referenzsignalaufbereitungsschaltung ist.

7. Verfahren nach Anspruch 1, wobei das Erfassen der Verzögerungszeit des nicht gemeinsamen Geräts umfasst:
Erfassen der vorgespeicherten Verzögerungszeit des nicht gemeinsamen Geräts aus einem Speicher (502), wobei die vorgespeicherte Verzögerungszeit des nicht gemeinsamen Geräts durch ein statisches Kalibrierverfahren bestimmt wird.

8. Vorrichtung zur Messung der Flugzeit, umfassend:
einen Controller (30, 501), einen Speicher (502), eine erste Signalleitung und eine zweite Signalleitung, wobei der Speicher ein Computerprogramm speichert, und das Computerprogramm dazu eingerichtet ist, durch den Controller geladen zu werden, um Schritte auszuführen, umfassend:

Senden von Referenzsignalen in der ersten Signalleitung und Bestimmen einer ersten Übertragungszeit der Referenzsignale in der ersten Signalleitung (S201);
**dadurch gekennzeichnet, dass** die Schritte ferner umfassen:

Senden von Messsignalen in der zweiten Signalleitung und Bestimmen einer zweiten Übertragungszeit der Messsignale in der zweiten Signalleitung (S202), wobei ein gemeinsames Gerät der ersten und zweiten Signalleitung ein temperaturabhängiges Gerät ist und ein nicht gemeinsames Gerät der ersten und zweiten Signalleitung ein nicht temperaturabhängiges Gerät ist;

Erfassen der Verzögerungszeit des nicht gemeinsamen Geräts (S203); und

Bestimmen der Flugzeit, die einem Zielobjekt entspricht, basierend auf der ersten Übertragungszeit, der zweiten Übertragungszeit und der Verzögerungszeit des nicht gemeinsamen Geräts (S204), wobei das Bestimmen der Flugzeit, die einem Zielobjekt entspricht, eine Differenzverarbeitung der ersten und zweiten Übertragungszeit umfasst.

9. Computerspeichermedium, wobei das Computerspeichermedium eine Vielzahl von Anweisungen speichert, die dazu geeignet sind, durch den Controller (30, 501) der Vorrichtung nach Anspruch 8 geladen zu werden, um das Verfahren nach einem der Ansprüche 1-7 auszuführen.

**Revendications**

1. Procédé de mesure du temps de vol, comprenant :

la transmission de signaux de référence dans une première liaison de signal, et la détermination d'un premier temps de transmission des signaux de référence dans la première liaison de signal (S201) ;

la transmission de signaux de mesure dans une seconde liaison de signal, et la détermination d'un second temps de transmission des signaux de mesure dans la seconde liaison de signal (S202),

**caractérisé en ce que**

un dispositif partagé entre la première liaison de signal et la seconde liaison de signal est un dispositif sensible à la température, et un dispositif non partagé entre la première liaison de signal et la seconde liaison de signal est un dispositif non sensible à la température,

le procédé comprend en outre :

l'acquisition d'un temps de retard du dispositif non partagé (S203) ; et

la détermination du temps de vol correspondant à un objet cible en fonction du premier temps de transmission, du second temps de transmission et du temps de retard du dispositif non partagé (S204), dans lequel la détermination du temps de vol correspondant à un objet cible comprend un traitement différentiel du premier temps de transmission et du second temps de transmission.

2. Procédé selon la revendication 1, dans lequel des dispositifs dans la première liaison de signal comprennent une puce de pilotage (31), un circuit de conditionnement de signal de référence (32), un commutateur de sélection (33), un circuit d'amplification (34) et un convertisseur analogique-numérique (35) ; et

des dispositifs dans la seconde liaison de signal comprennent la puce de pilotage (31), le commutateur de sélection (33), le circuit d'amplification (34), le convertisseur analogique-numérique (35), un émetteur laser (36), un amplificateur de transimpédance (37) et un capteur de réception (38),

dans lequel la première liaison de signal est une liaison de signal allant d'un port de sortie d'un contrôleur (30, 501), via la puce de pilotage, le circuit de conditionnement de signal de référence, le commutateur de sélection, le circuit d'amplification et le convertisseur analogique-numérique, jusqu'à un port d'entrée du contrôleur, et

dans lequel la seconde liaison de signal est une liaison de signal allant du port de sortie du contrôleur, via la puce de pilotage, l'émetteur laser, l'objet cible, le capteur de réception, l'amplificateur de transimpédance, le commutateur de sélection, le circuit d'amplification et le convertisseur analogique-numérique, jusqu'au port d'entrée du contrôleur.

3. Procédé selon la revendication 2, dans lequel l'émetteur laser comprend un transistor MOS en nitrure de gallium et une diode laser.

4. Procédé selon la revendication 2 ou 3, dans lequel les paramètres de dispositif du circuit de conditionnement de signal de référence (32) et de l'amplificateur de transimpédance (37) sont identiques et comprennent un temps de retard.

5. Procédé selon l'une quelconque des revendications 2 à 4, comprenant en outre :

avant la transmission des signaux de référence, la transmission de premiers signaux de commande au commutateur de sélection (33), dans lequel les premiers signaux de commande sont configurés pour commander le commutateur de sélection à conduire le circuit d'amplification (34) et le circuit de conditionnement de signal de référence (32) ; ou

avant la transmission des signaux de mesure, la transmission de seconds signaux de commande au commutateur de sélection (33), dans lequel les seconds signaux de commande sont configurés pour commander le commutateur de sélection à conduire le circuit d'amplification (34) et l'amplificateur de transimpédance (37).

6. Procédé selon la revendication 2, dans lequel la détermination du temps de vol correspondant à l'objet cible en fonction du traitement différentiel du premier temps de transmission, du second temps de transmission et du temps de retard du dispositif non partagé comprend :

la détermination du temps de vol correspondant à l'objet cible selon la formule suivante :

$$T_2 - T_1 = t_{laserT} + t_{TOF} + t_{laserR} + t_{TIA} - t'_{RS} \; ;$$

dans lequel $T_2$ est le second temps de transmission ; $T_1$ est le premier temps de transmission ; $t_{laserT}$ est le temps de retard de l'émetteur laser ; $t_{TOF}$ est le temps de vol correspondant à l'objet cible ; $t_{laserR}$ est le temps de retard du capteur de réception ; $t_{TIA}$ est le temps de retard de l'amplificateur de transimpédance, et $t'_{RS}$ est le temps de retard du circuit de conditionnement de signal de référence.

7. Procédé selon la revendication 1, dans lequel l'acquisition du temps de retard du dispositif non partagé comprend : l'acquisition d'un temps de retard préenregistré du dispositif non partagé à partir d'une mémoire (502), dans lequel le temps de retard préenregistré du dispositif non partagé est déterminé par une méthode d'étalonnage statique.

8. Dispositif de mesure du temps de vol, comprenant :
un contrôleur (30, 501), une mémoire (502), une première liaison de signal et une seconde liaison de signal, dans lequel la mémoire stocke un programme informatique, et le programme informatique est configuré pour être chargé par le contrôleur afin d'exécuter des étapes comprenant :

la transmission de signaux de référence dans la première liaison de signal, et la détermination d'un premier temps de transmission des signaux de référence dans la première liaison de signal (S201) ;
**caractérisé en ce que** les étapes comprennent en outre :

la transmission de signaux de mesure dans la seconde liaison de signal, et la détermination d'un second temps de transmission des signaux de mesure dans la seconde liaison de signal (S202), dans lequel un dispositif partagé entre la première liaison de signal et la seconde liaison de signal est un dispositif sensible à la température, et un dispositif non partagé entre la première liaison de signal et la seconde liaison de signal est un dispositif non sensible à la température ;
l'acquisition d'un temps de retard du dispositif non partagé (S203) ; et
la détermination du temps de vol correspondant à un objet cible en fonction du premier temps de transmission, du second temps de transmission et du temps de retard du dispositif non partagé (S204), dans lequel la détermination du temps de vol correspondant à un objet cible comprend un traitement différentiel du premier temps de transmission et du second temps de transmission.

9. Support de stockage informatique, dans lequel le support de stockage informatique stocke une pluralité d'instructions adaptées pour être chargées par le contrôleur (30, 501) du dispositif selon la revendication 8 afin d'exécuter le procédé selon l'une quelconque des revendications 1 à 7.

FIG. 1

S201: transmit reference signals in a first signal link, and determine first transmission time of the reference signals in the first signal link.

S202: transmit measurement signals in a second signal link, and determine second transmission time of the measurement signals in the second signal link.

S203: acquire the delay time of a non-shared device.

S204: determine flight time corresponding to a target object according the first transmission time, the second transmission time, and the delay time of the non-shared device.

FIG. 2

FIG. 3

FIG. 4

Controller
501

Memory 502

Target
object

First
signal
link

Second
signal
link

FIG. 5

**EP 4 095 560 B1**

## REFERENCES CITED IN THE DESCRIPTION

**Patent documents cited in the description**

- EP 1752789 A1
- US 20150138371 A1
- US 20180038945 A1